Europäisches Patentamt

European Patent Office

Office européen des brevets

(11) Publication number: **0 178 461**
**B1**

(19)

# EUROPEAN PATENT SPECIFICATION

(12)

(45) Date of publication of the patent specification:
**01.03.89**

(51) Int. Cl.⁴: **G01N 31/16**

(21) Application number: **85111567.5**

(22) Date of filing: **13.09.85**

(54) Method for determining the free acid content of metal chloride compositions.

(30) Priority: **15.10.84 US 660677**

(43) Date of publication of application:
**23.04.86 Bulletin 86/17**

(45) Publication of the grant of the patent:
**01.03.89 Bulletin 89/9**

(84) Designated Contracting States:
**DE FR GB**

(56) References cited:
**DE-A- 2 726 622**
**US-A- 3 717 435**

(73) Proprietor: **International Business Machines
Corporation, Old Orchard Road, Armonk, N.Y. 10504(US)**

(72) Inventor: **Levy, Elizabeth Robin, 8635 N. Central Park,
Skokie Illinois 60076(US)**
Inventor: **Powell, Douglas Oliver, 8 Wellington Court,
Endicott New York 13760(US)**
Inventor: **Skreckoski, Gerald Raymond, 10 Brown Lane,
Apalachin New York 13732(US)**

(74) Representative: **Kreidler, Eva-Maria, Dr. rer. nat.,
Schönaicher Strasse 220, D-7030 Böblingen(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention is concerned with a method for determining the free acid content of a metal halide composition and is especially concerned with metal halide compositions used as etchants. The present invention is particularly directed to determining the free acid content of cupric chloride compositions and ferric chloride compositions. The present invention provides a method for the direct measurement of the free acid content in metal chloride compositions.

Cupric chloride and ferric chloride solutions are commonly used for etching metal circuit patterns such as copper circuit patterns in the printed circuit industry and for metallized ceramic substrate fabrication. Ferric chloride compositions are also used to chemically machine steel and similar metals.

Many of the metal chloride etching compositions contain varying amounts of an acid such as hydrochloric acid. The hydrogen ions supplied by the acid are present for regeneration of the etching composition and to help assure that the etching by-products are soluble in the etching composition. In addition, the concentration of the free acid present has, to some extent, an effect upon the relative activity of the etching composition. The free acid content, or hydrogen ion concentration, in the etching compositions is reduced during regeneration of the etching composition and is reduced due to reactions occurring during the etching operation. However, precise control of the etching operation requires precise and tight control over the properties of the etching composition including over the amount of free acid or hydrogen ion concentration.

Heretofore, simple acid-base titrations employing hydroxide solutions have not been practical since the metal ions such as ferric, ferrous, cupric, or cuprous ions, which may be present in the etching compositions, have acid-like properties and, therefore, interfere with simple acid-base titrations. For instance, in ferric compositions, the titration endpoint is masked and extremely difficult to detect. In cupric solutions, the titration curve is distorted and the end-point shifted. Determining the free acid concentration of metal chloride etching compositions is particularly difficult since the compositions are strongly acidic (e.g., usually having pH of less than 1) thereby rendering pH determination almost meaningless.

Object of the present invention is a method for measuring the free acid content in metal chloride compositions.

The method of the present invention is a direct method which employs a relatively simple acid-base titration. Furthermore, the method of the present invention eliminates the distortion which may occur in the titration curves for various metal chloride compositions.

The object of the invention is achieved by a method according to claim 1.

It has been found, in accordance with the present invention, that diluting the sample to be tested with ammonium chloride makes it possible to directly measure the free acid content in the composition. In particular, the present invention is concerned with a method for determining the free acid content of a metal chloride composition which comprises diluting a sample of the composition for which the acid content is to be determined with an aqueous composition of an acid salt of ammonia. The aqueous composition of the acid salt of ammonia is in an amount by volume which is greater than the volume of the sample of the metal chloride composition to thereby obtain a diluted metal halide composition. The diluted metal chloride composition is titrated with at least one hydroxide to the acid end point. The hydroxide can be an alkali hydroxide or ammonium hydroxide.

Figs. 1 and 2 are titration curves for metal chloride compositions obtained in accordance with the present invention.

Figs. 3 and 4 are titration curves for metal chloride compositions whereby the sample is diluted with deionized water.

Figs. 5 and 6 are titration curves compared to theoretical calculations.

The metal chloride compositions for which the free acid content is to be determined are preferably cupric chloride aqueous compositions and ferric chloride aqueous compositions which are especially suitable for etching. Typical cupric chloride etching solutions contain from about 1 to about 5 molar cupric chloride and up to about 4 normal of an acid, preferably an inorganic acid such as hydrochloric acid. The pH of such solutions is usually less than 1, however, the pH of the solution could be higher, if desired. Typical ferric chloride etchant solutions contain from about 1 molar to about 5 molar of ferric chloride and up to about 2 normal of an acid, preferably an inorganic acid such as hydrochloric acid. Also, such compositions have a pH of less than 1, but can have a higher pH, if desired. In addition, the etching compositions can contain an accelerator such as an ammonium compound. However, as will be appreciated, the amount of ammonium compound in the etchant solution itself is not sufficient to function in improving the determination for the free acid content pursuant to the present invention. Suggestions of accelerators for cupric chloride and/or ferric chloride etchant solutions can be found in U.S. Patents 3 933 544; 4 058 431; 4 233 106; 3 083 129; and 3 809 588.

In accordance with the present invention, a small portion of the chloride composition, or sample, is diluted with an aqueous composition of an acid salt of ammonia. The preferred ammonium compound is an ammonium halide and, most preferably, ammonium chloride. The aqueous composition is preferably a solution containing about 0.25 normal to about 5 normal of ammonium chloride and preferably about 1 normal to about 4 normal ammonium chloride. The sample is diluted with an amount of the aqueous composition which is greater by volume than the volume of the metal chloride sample in order to obtain a diluted metal chloride composition. Usually, at least about 2 parts by volume of the ammonia composition per 1 part by volume of the sample is employed, and preferably, about 5 to about 50 parts by volume, and most preferably, about 10 to about 30 parts by volume of the ammonium composition to the sample. Preferably, about 10 to about 60 times the amount of ammonium per amount of metal ion is employed.

After dilution, the diluted metal chloride composition is then titrated to its acid end point with at least one hydroxide selected from the group of alkali hydroxide and ammonium hydroxide. The preferred hydroxide is sodium hydroxide.

The following non-limiting examples are presented to further illustrate the present invention.

EXAMPLE 1

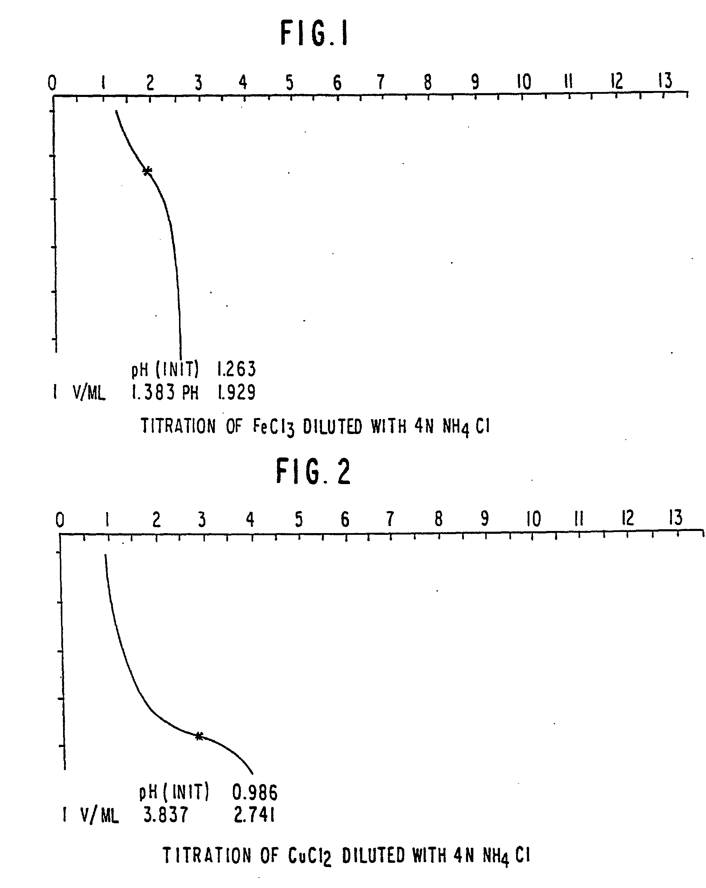

About 2 milliliters of a ferric chloride etchant composition containing about 2.1 molar of ferric chloride and 0.72 normal HCl and having a specific gravity of about 1.26 is diluted with 50 milliliters of a 4 normal ammonium chloride solution. The sample is then titrated with 1 normal sodium hydroxide. The results obtained are illustrated in Figure 1.

COMPARATIVE EXAMPLE 2

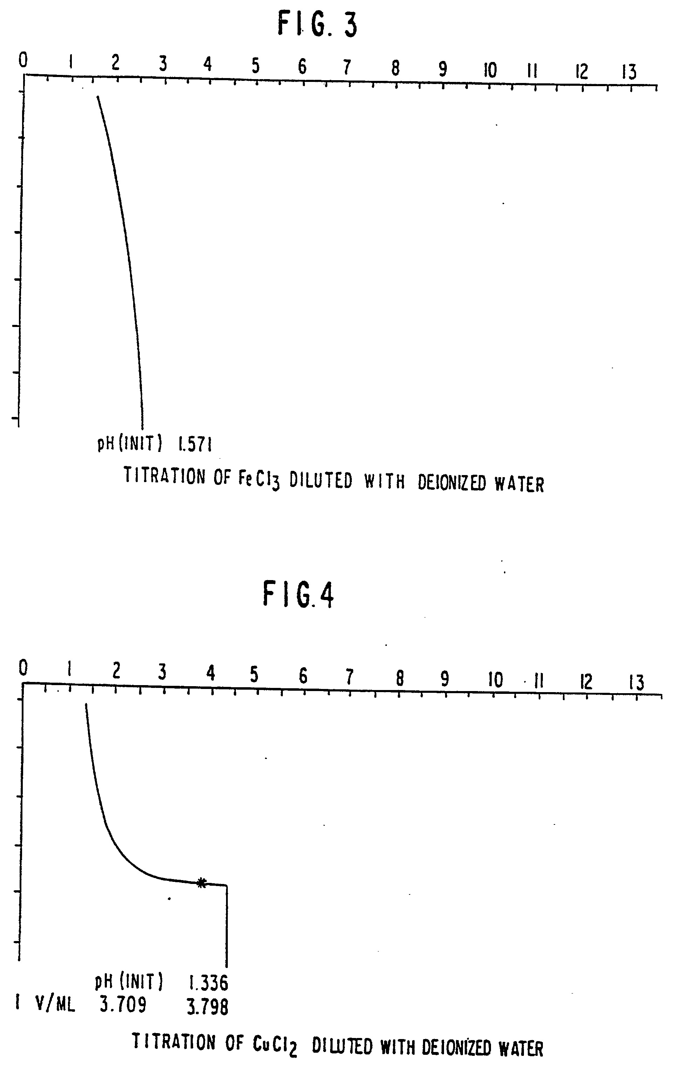

Example 1 is repeated, except that the dilution is with deionized water instead of the 4 normal ammonium chloride. The results from the titration are shown in Figure 3.

EXAMPLE 3

About 2 milliliters of a cupric chloride etching composition containing about 2.8 molar cupric chloride and 1.96 normal HCl is diluted with 50 milliliters of 4 normal ammonium chloride solution. The sample is then titrated with 1 normal sodium hydroxide. The results obtained are shown in Figure 2.

COMPARATIVE EXAMPLE 4

Example 3 is repeated, except that the dilution is with deionized water instead of the 4 normal ammonium chloride solution. The results obtained are shown in Figure 4.

A comparison of Figure 1 with Figure 3 shows that the present invention provides an enhanced curve inflection at the end point, thereby providing for an improved technique for measuring the free acid content. In addition, a comparison of Figures 2 and 4 show that the curve distortion which occurs when diluting with deionized water is eliminated when following the technique of the present invention.

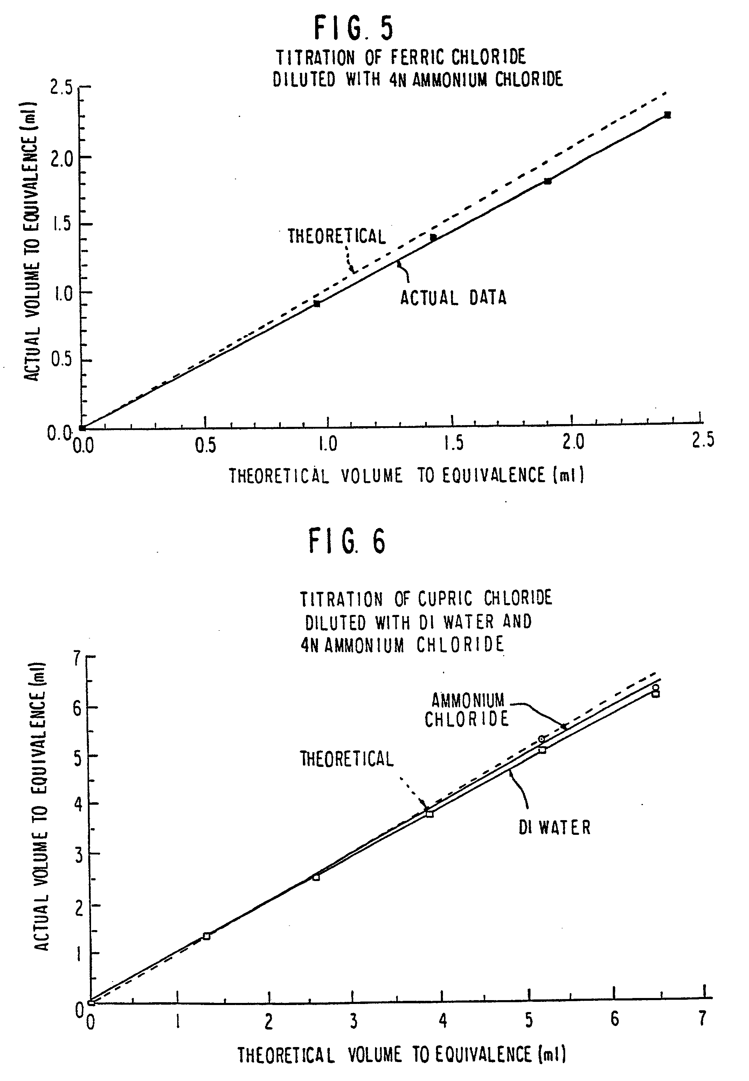

In addition, Figure 5 compares the actual results obtained in comparison to the theoretical results from titration using the technique of the present invention for known amounts of free acid in the sample. As shown by Figure 5, the present invention provides for a very reliable detection of the free acid content in the ferric chloride solution. In addition, Figure 6 illustrates the results obtained by following the present invention employing a dilution with 4 normal ammonium chloride, as compared to the same dilution with deionized water and a curve for the theoretical amount for known quantities of free acid in the sample. As shown by the results obtained, the present invention provides a much more accurate detection of the free acid content in the cupric chloride solutions as compared to the use of deionized water for the dilution.

Claims

1. Method for determining the free acid content of a metal chloride composition which comprises diluting a sample of the composition, for which the acid content is to be determined, with an aqueous composition of an acid salt of ammonia in an amount by volume greater than the volume of said metal chloride composition to obtain a diluted metal chloride composition, and then titrating said diluted metal chloride composition with at least one hydroxide selected from the group of alkali hydroxide and ammonium hydroxide to the acid end point.

2. Method of claim 1 wherein said acid salt of ammonia is an ammonium halide.

3. Method of claim 2 wherein said acid salt of ammonia is ammonium chloride.

4. Method of claim 3 wherein the ammonium chloride is employed as an aqueous solution containing about 0.25 to about 5 normal of ammonium chloride.

5. Method of claim 4 wherein said solution contains about 1 to about 4 normal ammonium chloride.

6. Method of claim 1 wherein at least about 2 parts by volume of said aqueous composition per 1 part by volume of said metal chloride composition is employed.

7. Method of claim 1 wherein about 5 to about 50 parts by volume of said aqueous composition per part by volume of said metal chloride composition is employed.

8. Method of claim 1 wherein about 10 to about 30 parts by volume of said aqueous composition per part by volume of said metal chloride composition is employed.

9. Method of claim 1 wherein about 10 to about 60 times the amount of ammonia per amount of metal ion is employed.

10. Method of claim 1 wherein said hydroxide is an alkali hydroxide.

11. Method of claim 10 wherein said alkali hydroxide is sodium hydroxide.

12. Method of claim 1 wherein the pH of said metal chloride composition is less than 1.

13. Method of claim 1 wherein said metal chloride composition is a ferric chloride aqueous composition or a cupric chloride aqueous composition.

Revendications

1. Procédé de détermination du contenu en acide libre d'une composition de chlorure métallique qui comprend la dilution d'un échantillon de la composition, pour laquelle le contenu acide doit être déterminé, dans une composition aqueuse de sel acide d'ammonium selon une quantité en volume supérieure au volume de la composition de chlorure métallique pour obtenir und composition de chlorure métallique diluée et ensuite le titrage de la composition de chlorure métallique diluée avec au moins un hydroxyde choisi dans le groupe comprenant les hydroxydes alcalins et l'hydroxyde d'ammonium jusqu'à la fin de la réaction acido-basique.

2. Procédé selon la revendication 1, dans lequel le sel acide d'ammonium est un halogénure d'ammonium.

3. Procédé selon la revendication 2, dans lequel le sel acide d'ammonium est du chlorure d'ammonium.

4. Procédé selon la revendication 3, dans lequel le chlorure d'ammonium est utilisé sous forme d'une solution aqueuse de chlorure d'ammonium de normalité d'environ 0,25 à environ 5.

5. Procédé selon la revendication 4, dans laquelle la solution de chlorure d'ammonium a une normalité d'environ 1 à environ 4.

6. Procédé selon la revendication 1, dans lequel au moins deux parties en volume de la composition aqueuse pour une partie en volume de la composition de chlorure métallique sont utilisées.

7. Procédé selon la revendication 3, dans lequel au moins deux parties en volume de la composition aqueuse pour une partie en volume de la composition de chlorure métallique sont utilisées.

8. Procédé selon la revendication 1, dans lequel environ 10 à environ 30 parties en volume de la composition aqueuse par partie en volume de la composition de chlorure métallique sont utilisées.

9. Procédé selon la revendication 1, dans lequel environ 10 à environ 60 fois la quantité d'ammonium par quantité d'ions métalliques sont employés.

10. Procédé selon la revendication 1, dans lequel l'hydroxyde est l'hydroxyde alcalin.

11. Procédé selon la revendication 10, dans lequel l'hydroxyde alcalin est un hydroxyde de sodium.

12. Procédé selon la revendication 1, dans lequel le pH de la composition de chlorure métallique est inférieur à 1.

13. Procédé selon le revendication 1, dans lequel la composition de chlorure métallique est une composition aqueuse de chlorure ferrique ou une composition aqueuse de chlorure cuivrique.

## Patentansprüche

1. Verfahren zum Bestimmen des Gehalts an freier Säure in einer Metallchloridzusammensetzung, dadurch gekennzeichnet, daß eine Probe der Zusammensetzung, deren Säuregehalt zu bestimmen ist, zur Gewinnung einer verdünnten Metallchloridzusammensetzung mit einer wäßrigen Zusammensetzung eines sauren Ammoniumsalzes in einer Volumen-Menge verdünnt wird, die größer ist als das Volumen der Metallchloridzusammensetzung, und daß anschließend die verdünnte Metallchloridzusammensetzung mit mindestens einem Hydroxid aus der Gruppe von Alkalihydroxid und Ammoniumhydroxid bis zum Säureendpunkt titriert wird.

2. Verfahren nach Anspruch 1, dadurch gekennzeichnet, daß das saure Ammoniumsalz ein Ammoniumhalogenid ist.

3. Verfahren nach Anspruch 2, dadurch gekennzeichnet, daß das saure Ammoniumsalz Ammoniumchlorid ist.

4. Verfahren nach Anspruch 3, dadurch gekennzeichnet, daß das Ammoniumchlorid in Form einer wäßrigen Lösung verwendet wird, welche ca. 0,25 bis 5 normal an Ammoniumchlorid ist.

5. Verfahren nach Anspruch 4, dadurch gekennzeichnet, daß die Lösung ca. 1 bis 4 normal an Ammoniumchlorid ist.

6. Verfahren nach Anspruch 1, dadurch gekennzeichnet, daß mindestens ca. 2 Volumenteile der wäßrigen Lösung auf 1 Volumenteil der Metallchloridzusammensetzung verwendet werden.

7. Verfahren nach Anspruch 1, dadurch gekennzeichnet, daß ca. 5 Volumenteile der wäßrigen Lösung auf 1 Volumenteil der Metallchloridzusammensetzung verwendet werden.

8. Verfahren nach Anspruch 1, dadurch gekennzeichnet, daß ca. 10 bis 30 Volumenteile der wäßrigen Lösung per Volumenteil der Metallchloridzusammensetzung verwendet werden.

9. Verfahren nach Anspruch 1, dadurch gekennzeichnet, daß die ungefähr zehn- bis sechzigfache Menge an Ammonium per Metallionenmenge verwendet wird.

10. Verfahren nach Anspruch 1, dadurch gekennzeichnet, daß das Hydroxid ein Alkalihydroxid ist.

11. Verfahren nach Anspruch 10, dadurch gekennzeichnet, daß das Alkalihydroxid Natriumhydroxid ist.

12. Verfahren nach Anspruch 1, dadurch gekennzeichnet, daß der pH-Wert der Metallchloridzusammensetzung kleiner 1 ist.

13. Verfahren nach Anspruch 1, dadurch gekennzeichnet, daß die Metallchloridzusammensetzung eine wäßrige Eisen(III)-chloridzusammensetzung oder eine wäßrige Kupfer(II)-chloridzusammensetzung ist.

EP 0 178 461 B1

## FIG. 1

0 1 2 3 4 5 6 7 8 9 10 11 12 13

pH (INIT) 1.263
1 V/ML 1.383 PH 1.929

TITRATION OF FeCl₃ DILUTED WITH 4N NH₄Cl

## FIG. 2

0 1 2 3 4 5 6 7 8 9 10 11 12 13

pH (INIT) 0.986
1 V/ML 3.837 2.741

TITRATION OF CuCl₂ DILUTED WITH 4N NH₄Cl

# FIG. 3

pH(INIT) 1.571

TITRATION OF FeCl₃ DILUTED WITH DEIONIZED WATER

# FIG.4

| | pH (INIT) | 1.336 |
| I V/ML | 3.709 | 3.798 |

TITRATION OF CuCl₂ DILUTED WITH DEIONIZED WATER

# FIG. 5
## TITRATION OF FERRIC CHLORIDE
## DILUTED WITH 4N AMMONIUM CHLORIDE

# FIG. 6

## TITRATION OF CUPRIC CHLORIDE
## DILUTED WITH DI WATER AND
## 4N AMMONIUM CHLORIDE